# EUROPEAN PATENT SPECIFICATION

(11) **EP 4 047 190 B1**
(45) Date of publication and mention of the grant of the patent: **07.01.2026**
(21) Application number: 22157991.5
(22) Date of filing: 22.02.2022
(51) Int. Cl.: F01D 11/08, F01D 25/12

(54) **RING SEGMENT AND TURBOMACHINE**
RINGSEGMENT UND TURBOMASCHINE
SEGMENT ANNULAIRE ET TURBOMACHINE LE COMPRENANT

(30) Priority: 23.02.2021 KR 20210024022
(43) Date of publication of application: 24.08.2022
(73) Proprietor: Doosan Enerbility Co., Ltd., Seongsan-gu Changwon-si, Gyeongsangnam-do 51711 (KR)
(72) Inventor: JANG, Yun Chang, 50842 Gimhae-si, Gyeongsangnam-do (KR)
(74) Representative: BCKIP Part mbB

(56) References cited:
- EP-A1- 2 860 358
- EP-A1- 3 318 720
- EP-A2- 1 375 824
- WO-A1-95/27126
- US-A1- 2013 323 033

## Description

### CROSS REFERENCE TO RELATED APPLICATION

The present application claims priority to Korean Patent Application No. 10-2021-0024022, filed on February 23, 2021.

### 1. Field of the Invention

The present invention relates to a gas turbine or a steam turbine including a ring segment.

More particularly, the ring segment is installed on an inner circumferential surface of a casing of the gas turbine or steam turbine and disposed to face an end of a blade installed in the casing.

### 2. Description of the Background Art

A turbomachine refers to a device that generates a driving force used to generate electric power by using fluid (specifically, gas) passing through the turbomachine. Therefore, a turbomachine and a generator are usually used together. Examples of the turbomachine include gas turbines, steam turbines, and wind power turbines. A gas turbine mixes compressed air and natural gas and burns the mixture to generate combustion gas that is used to generate a driving force for the generation of electric power. A steam turbine heats water to generate steam that is used to generate a driving force for the generation of electric power. A wind turbine converts wind power into a driving force for the generation of electric power.

Among the turbo machines, the gas turbine is composed of a compressor section, a combustor section, and a turbine section. The compressor section includes: a compressor casing; and compressor vanes and compressor blades that are alternately arranged in the compressor casing. The compressor takes in air through a compressor inlet scroll strut. The air introduced into the compressor casing is compressed by the compressor vanes and the compressor blades while passing through the inside of the compressor section. The combustor section receives the compressed air produced by the compressor section and mixes it with fuel. In addition, the combustor ignites the fuel-air mixture with an igniter to generate hot pressurized combustion gas. The hot pressurized combustion gas is supplied to the turbine section. The turbine section includes multiple turbine vanes and multiple turbine blades that are alternately arranged in a turbine casing. The turbine section receives the hot pressurized combustion gas and allows it to pass therethrough. The combustion gas introduced into the turbine casing rotates the turbine blades while passing through the inside of the turbine casing and then flows out of the turbine casing through a turbine diffuser.

On the other hand, the steam turbine is composed of an evaporator and a turbine. The evaporator generates steam by heating water that is externally supplied. The turbine of the steam turbine includes: a turbine casing; and multiple turbine vanes and multiple turbine blades that are alternately arranged in the turbine casing as with the turbine of the gas turbine. However, the turbine of the steam turbine uses the steam generated by the evaporator as a driving force source for rotating the turbine blades, whereas the turbine of the gas turbine uses the combustion gas.

In either case, the turbine is composed of a turbine stator and a turbine rotor which is installed in the turbine stator. Here, the turbine stator includes a turbine casing, turbine vanes coupled to the inner circumferential surface of the turbine casing, and a ring segment coupled to the inner circumferential surface of the turbine casing and disposed between the adjacent turbine vanes in terms of a flow direction of combustion gas or steam. The turbine rotor includes a turbine disk and turbine blades coupled to the outer circumferential surface of the turbine disk.

To prevent the ring segments from being damaged by the heat of the combustion gas or steam flowing through the turbine casing, each of the ring segments is provided with a cooling channel through which cooling air flows. However, since the cooling channels of conventional ring segments have a circular cross section, it is difficult to effectively dissipate the heat, which is transferred to the ring segments from high-temperature combustion gas or steam that flows in a radially inward direction of the ring segments.

WO 95/27126 A1 discloses a turbine shroud segment fixed by hooks in the stator of a gas turbine engine. The turbine shroud segment includes a serpentine cooling channel along at least one axial edge of the segment.

EP 3 318 720 A1 discloses a cooled structure of a gas turbine engine. The cooled structure has a main body with a leading edge, a trailing edge, a first side portion, a second side portion, and a cavity. A first set of cooling air micro-channels extends from the cavity and is arranged along the first side portion. A second set of cooling air micro-channels extends from the cavity and is arranged along the second side portion. The first and second set of cooling air micro-channels have turning portions positioned adjacent each other and interwoven exhaust ends originating from each opposing side micro-channel. Each interwoven exhaust end extends around the opposing turning portion and is configured to exhaust cooling air from a plurality of exhaust ports positioned generally radially outward from the turning portions.

EP 2 860 358 A1 discloses a cooled wall segment in the hot gas path of a gas turbine, particularly a cooled stator heat shield. The wall segment comprises a first surface, exposed to a medium of relatively high temperature, a second surface, exposed to a medium of relatively low temperature, and at least one cooling channel for a flow-through of a fluid cooling medium whereby the cooling channel comprises two heat transfer sections, a first heat transfer section extending essentially parallel to the surface of relatively high temperature in a first distance and a second heat transfer section extending essentially parallel to the surface of relatively high temperature in a second distance, whereby the second distance is lower than the first distance.

US 2013/323033 A1 discloses a blade outer air seal (BOAS) for a gas turbine engine including a wall, a forward hook and an aft hook. The wall includes a cored passage extending along at least a portion of the wall. The cored passage extends radially and axially through a portion of the aft hook to communicate with one or more apertures along a trailing edge of the aft hook. Cored passages in the form of sinuously curved lateral walls allow for flow turbulator features. Augmentation surfaces in the form of trip strips are additionally added to surfaces of the cored passages.

### SUMMARY OF THE INVENTION

To solve the problems occurring in the related art, the present invention proposes a gas turbine or steam turbine in accordance with claim 1.

It is one of the ideas of the invention to provide the turbine with a ring segment having cooling channels having a different cross section so that heat transferred to the ring segment from high-temperature combustion gas or steam can be effectively dissipated.

In one aspect, the present invention proposes a ring segment installed on an inner circumferential surface of a casing of a gas turbine or steam turbine and disposed to face an end of a blade disposed inside the casing, the ring segment including: a segment body disposed radially inside the casing and provided with multiple cooling channels through which cooling air flows and which are formed in the segment body; and two segment protrusions protruding outward from the segment body, coupled to the inner circumferential surface of the casing, and spaced apart from each other in a flow direction of fluid flowing through the casing so as to form an RS cavity through which cooling air flows. When the segment body is cross-sectional along an imaginary plane including a radial straight line of the casing, the cooling channel is formed such that a width in a direction perpendicular to a radial direction of the casing is larger than a width in the radial direction of the casing.

### BRIEF DESCRIPTION OF THE DRAWINGS

FIG. 1 is a diagram illustrating a gas turbine among various turbomachines;
FIG. 2 is a perspective view of a ring segment of a gas or steam turbine according to one embodiment of the present invention;
FIG. 3 is a cross-sectional view of the ring segment, which is taken along line X-X in FIG. 2;
FIG. 4 is a perspective view of the ring segment that is partially cut along line Y-Y in FIG. 2; and
FIG. 5 is a cross-sectional view of the ring segment, which is taken along line Y-Y in FIG. 2.

### DETAILED DESCRIPTION OF THE INVENTION

While the present invention has been described with reference to exemplary embodiments, those skilled in the art will appreciate that the exemplary embodiments are presented only for illustrative purposes and the present invention is not limited to the disclosed exemplary embodiments. On the contrary, it will be understood that various modifications and equivalents thereof are possible.

Accordingly, the present invention is defined by the appended claims.

Hereinafter, a ring segment 100 and a turbomachine equipped with the ring segment will be described with reference to the accompanying drawings. Throughout the description below, a gas turbine 1 is assumed to be a turbomachine according to the present invention. However, it is only illustrative. For example, a turbomachine according to the present invention may be a steam turbine rather than a gas turbine.

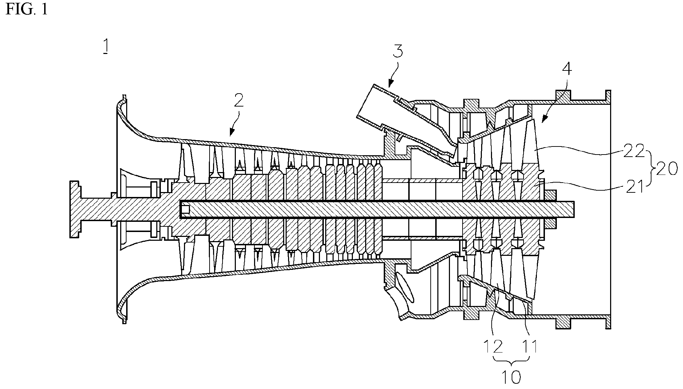

Referring to FIG. 1, according to the present invention, a gas turbine 1 includes a compressor 2, a combustor 3, and a turbine 4. In the direction of flow of gas (for example, compressed air or combustion gas) in the gas turbine 1, the compressor 2 is disposed at a relatively upstream position and the turbine 4 is disposed at a relatively downstream position. The combustor 3 is disposed between the compressor 2 and the turbine 4.

The compressor 2 includes compressor vanes and compressor rotors that are accommodated in a compressor casing, and the turbine 4 includes turbine vanes 12 and turbine rotors 20 that are accommodated in a turbine casing 11. The compressor vanes and the compressor rotors are arranged in multiple stages along the direction of flow of compressed air, and the turbine vanes 12 and the turbine rotors 20 are arranged in multiple stages along the direction of flow of combustion gas. The size of the internal space of the compressor 2 decreases from the front stage to the rear stage thereof so that the introduced air can be compressed while passing through the inside of the compressor 11. On the contrary, the size of the internal space of the turbine 4 increases from the front stage to the rear stage thereof so that the introduced combustion gas can expand while passing through the inside of the turbine 13.

In addition, a torque tube serving as a torque transmission member is disposed between the last-stage compressor rotor of the compressor 2 and the first-stage turbine rotor of the turbine 4 to transfer the torque generated by the turbine 4 to the compressor 2. Referring to FIG. 1, the torque tube is composed of a plurality of torque tube disks arranged in three stages. However, the structure of FIG. 1 is only an example. Alternatively, the torque tube may be composed of torque tube disks arranged in four or more stages. Further alternatively, the torque tube may be composed of torque tube disks arranged in two or fewer stages.

The compressor rotor includes a compressor disk and compressor blades. A plurality of (for example, 14) compressor disks is disposed in the compressor casing, and the multiple compressor disks are fastened by a tie road so as not to be separated from each other in the axial direction of the compressor. More specifically, the compressor disks are arranged in the axial direction with the tie rod extending through the centers of the compressor disks. The opposing surfaces of the respective compressor disks adjacent to each other are pressed against each other by the tie rod so that the compressor disks cannot rotate relative to each other.

Multiple compressor blades are radially coupled to the outer surface of each of the compressor disks and arranged in a circumferential direction of the compressor disk. For each compressor stage, multiple compressor vanes are arranged on the inner surface of the compressor casing in the circumferential direction to form an overall annular shape and are alternately arranged with the multiple compressor blades. Unlike the compressor blades, the compressor vanes are installed in a stationary manner so as not to rotate. The compressor vanes align the flow of compressed air passing through the compressor blades and guide the flow of the compressed air to the next-stage compressor blades. Herein, the compressor casing and the compressor vanes will be collectively named a compressor stator to be distinguished from the compressor rotor.

The tie rod is installed to extend through the centers of the multiple compressor disks and the multiple turbine disks. One end of the tie rod is fastened to the compressor disk located most upstream in the compressor, and the other end is fastened by a fixing nut.

The shape of the tie rod varies according to the type of a gas turbine. Therefore, it is noted that the shape of the tie rod is not limited to the example illustrated in FIG. 1. There are largely three types of tie rods: a single-type in which a single tie rod extends through the centers of the respective compressor disks and the centers of the respective turbine rotor disks; a multi-type in which multiple tie rods are arranged in a circumferential direction; and a complex type in which the single-type and the multi-type are combined.

Although not illustrated, the compressor of the gas turbine is provided with a deswirler serving as a guide blade. The deswirler increases the pressure of fluid flowing into the combustor and adjusts the flow angle of the fluid to be substantially equal to the designed flow angle.

The combustor 3 mixes the introduced compressed air with fuel and burns the air-fuel mixture to produce hot pressurized combustion gas. The combustor increases, through an isobaric combustion process, the temperature of the combustion gas to a heat-resistant temperature at which the components of the combustor and the components of the turbine can endure.

In a combustor casing, multiple combustors constituting the combustion system of the gas turbine 1 are provided in the form of respective cells. Each combustor includes a nozzle for injecting fuel, a liner defining a combustion chamber, and a transition piece that is a coupling part that connects the combustion chamber and the turbine to each other.

More specifically, the liner defines the combustion chamber in which the fuel injected through the fuel injection nozzle and the compressed air fed from the compressor are mixed and burned. That is, the liner 120 provides a combustion chamber (i.e., space for combustion) in which the fuel-air mixture is combusted and a liner annular flow passage 124 that is an annular space surrounding the combustion chamber. In addition, the nozzle for injecting fuel is installed at the front end of the liner, and an igniter is installed in the wall of the liner.

There are two streams of compressed air in the liner annular flow passage. Specifically, cold compressed air introduced through a plurality of holes formed in the outer wall of the liner makes a cold air stream and hot compressed air resulting from cooling the transition piece makes a hot air stream. The cold air stream flows near the outer surface of the liner and prevents the liner from being damaged by heat generated through the combustion of fuel in the combustion chamber.

The transition piece is coupled to the rear end (i.e., downstream end) of the liner to deliver the combustion gas, produced in the combustion chamber after the flame is started by a spark igniter plug, to the turbine section. Like the liner, the transition piece has a transition piece annular flow passage surrounding the internal space of the transition piece, and compressed air flowing through the transition piece annular flow passage cools the outer surface of the transition piece, thereby protecting the transition piece against thermal damage attributable to the high temperature of the combustion gas.

The hot pressurized combustion gas ejected from the combustor 3 is introduced into the turbine 4. The hot pressurized combustion gas supplied to the turbine 4 expands while passing through the inside of the turbine 4. The expansion of the combustion gas causes impulse and reaction forces with respect to the turbine blades 22, thereby generating torque. The torque is transferred to the compressor through the torque tube described above, and an excessive portion of the torque exceeding the power required to driving the compressor is used to drive a generator or the like.

The turbine 4 is fundamentally similar to the compressor 2 in terms of the structure. That is, the turbine 4 includes a plurality of turbine rotors 20 similar to the compressor rotors of the compressor 2. Each turbine rotor 20 includes a turbine disk 21 and a plurality of turbine blades 22 radially coupled to the outer surface of the turbine disk 21. For each turbine stage, a plurality of turbine vanes 12 is radially coupled to the inner surface of the turbine casing 11 and is arranged in the circumferential direction. The turbine vanes 12 are alternately arranged with the turbine blades 22. The turbine vanes 16 guide the flow of the combustion gas passing through the turbine blades 22. Herein, the turbine casing 11 and the turbine vanes 12 will be collectively named a turbine stator 10 to be distinguish the turbine rotor 20.

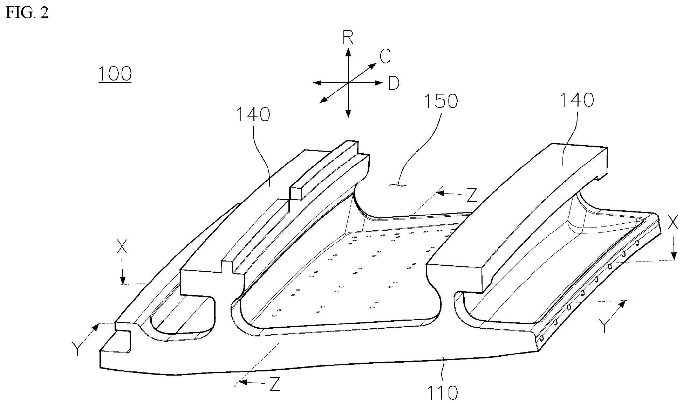

Hereinafter, for convenience of description, reference character C denotes a circumferential direction of the turbine casing 11, reference character R denotes a radial direction of the turbine casing 11, and reference character D denotes a flow direction of fluid flowing through the turbine casing 11. Referring to FIG. 2, the left side may be an upstream side in terms of the flow direction D of the fluid, and the right side may be a downstream side in the flow direction D of the fluid. In the case where a turbomachine is the gas turbine 1 as in the case of the embodiment of the present invention, the fluid flowing along the fluid flow direction D is combustion gas. On the other hand, when the turbomachine is a steam turbine, the fluid flowing along the fluid flow direction D is steam. The fluid flow direction D may be the same as the axial direction of the gas turbine 1 and as the longitudinal direction of the tie rod.

Referring to FIGS. 2 to 5, a ring segment 100, according to the present invention, is installed on the inner circumferential surface of the turbine casing 11 and is disposed to face an end of the turbine blade 22 disposed inside the turbine casing 11. The ring segment 100 includes a segment body 110 and two segment protrusions 140.

The segment body 110 is formed in a plate shape that is bent further outward in the radial direction R toward the downstream side in the flow direction D. The segment body 110 has multiple cavities and channels formed therein so that cooling air flows through the cavities and the channels. The cooling air may be compressed air supplied from the compressor 2 or may be air that is externally supplied from an air source disposed outside the gas turbine 1. The segment protrusions 140 protrude outward in the radial direction R of the segment body 110 and are coupled to the inner circumferential surface of the turbine casing 11. The segment protrusions 140 are spaced apart from each other, in the flow direction D, to form an RS cavity 150 therebetween. Specifically, the segment protrusions 140 are formed at an upstream portion and a downstream portion, respectively, in the flow direction D.

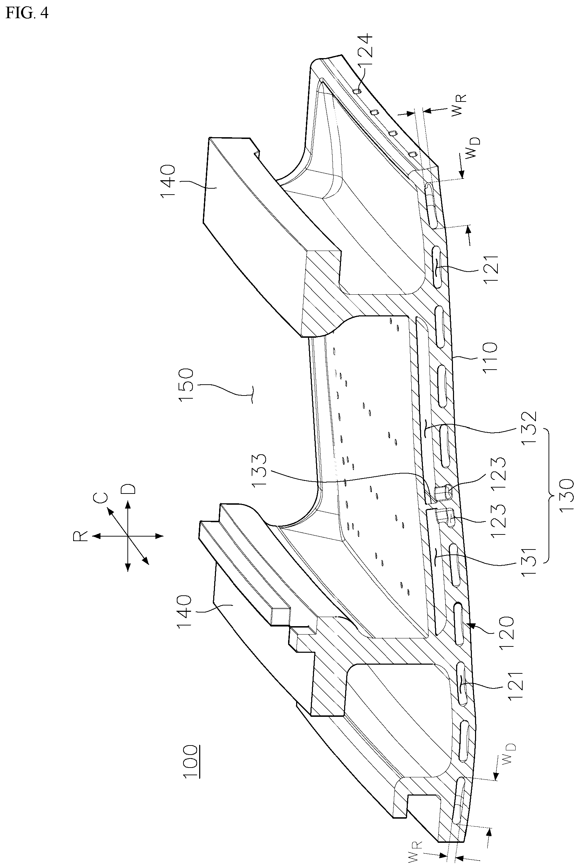

Referring to FIG. 4, the multiple cooling channels 120 are disposed in a relatively inner portion in the radial direction R of the ring segment 100. Accordingly, the cooling air flowing through the multiple cooling channels 120 cools the inner portion of the ring segment 100 in the radial direction R of the ring segment 100 heated by the heat of the combustion gas. The cooling cavity 130 is disposed outside the multiple cooling channels 120 in the radial direction R. Accordingly, the cooling air supplied to the RS cavity 150 first flows into the multiple cooling channels 120 through the cooling cavity 130.

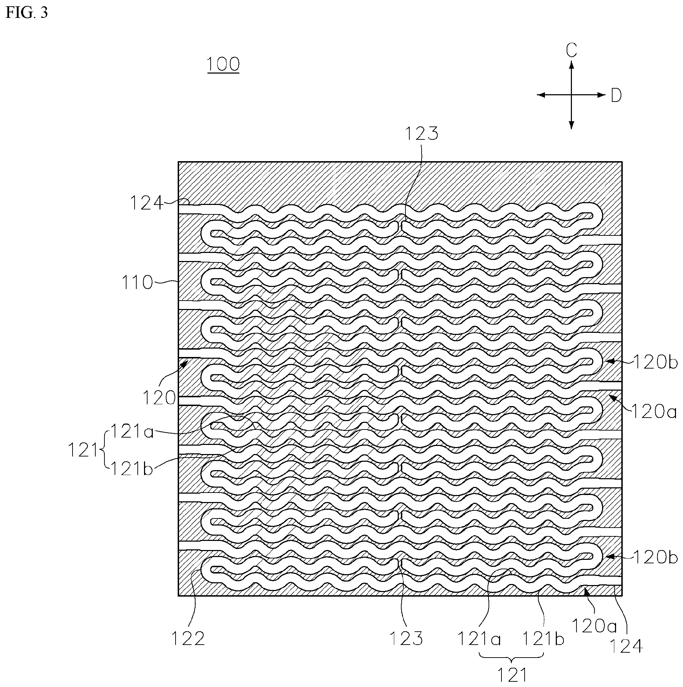

Referring to FIG. 3, the multiple cooling channels 120 may be divided into multiple first cooling channels 120a and multiple second cooling channels 120b. Each of the first cooling channels 120a may first pass through the downstream end of the segment body 110, then extend to the upstream side of the segment body 110, and then return to the downstream side. Each of the second cooling channels 120b may first pass through the upstream end of the segment body 110, then extend to the downstream side of the segment body 110, and then return to the upstream side. The first cooling channels 120a and the second cooling channels 120b may be alternately arranged in the circumferential direction C.

One cooling channel 120 has a meandering shape and is composed of multiple curved portions 121, multiple return portions 122, multiple inlets 123, and multiple outlets 124.

The multiple curved portions 121 are sequentially and continuously arranged in the flow direction D and are curved (or bent) in the circumferential direction C. The multiple curved portions 121 may be divided into multiple first bent portions 121a and multiple second bent portions 121b. The first bent portions 121a and the second bent portions 122b are alternately disposed in the flow direction D and are formed to be oppositely bent in the circumferential directions C. The circumferential direction C include a clockwise direction and a counterclockwise direction. When the first bent portions 121a are bent in the clockwise direction, the second bent portions 121b are bent in the counterclockwise direction.

The return portion 122 is a U-shaped curved portion and is disposed adjacent to a downstream end or an upstream end of the segment body 110 . The return portion 122 guides the fluid flowing through any one of the curved portions 121 to the next curved portion 121 adjacent to the preceding curved portion 121 in the circumferential direction C. That is, the return portion 122 is a portion in which the fluid changes its direction. The return portion 122 of the first cooling channel 120a is disposed on the upstream side. The return portion 122 of the second cooling channel 120b is disposed on the upstream side.

The inlet 123 is connected to the curved portion 121 and is connected to the cooling cavity 130. Accordingly, the cooling air introduced into the cooling cavity 130 from the RS cavity 150 is introduced into the curved portion 121 through the inlet 123. The outlet 124 is connected to the curved portion 121 and communicates with the outside of the segment body 110. The cooling air flowing through the multiple curved portions 121 is discharged from the upstream end or the downstream end of the segment body 110. That is, the cooling air sequentially flows in the following order: the RS cavity 150 -> the cooling cavity 130-> the inlet 123 -> the multiple curved portions 121 -> the return portion 122 -> the multiple curved portions 121 -> the outlet 124.

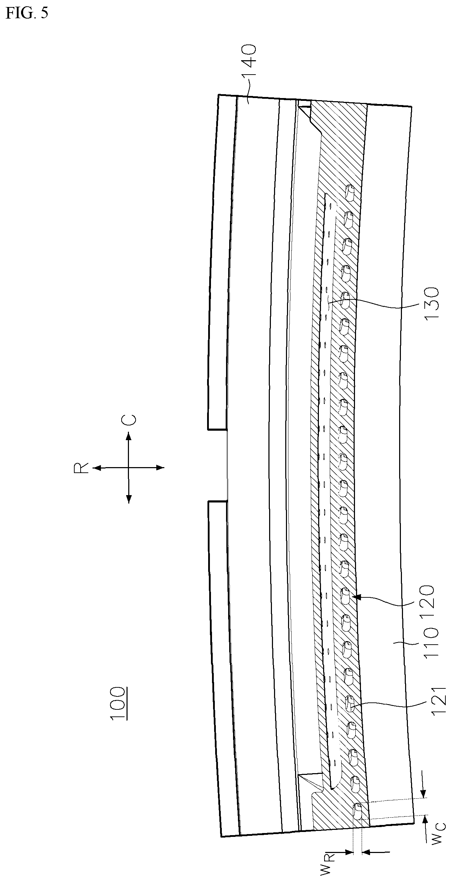

Referring to FIGS. 4 and 5, when the segment body 110 is cut along in an imaginary plane (not shown) including a straight line extending in the radial direction R, the cross section of the cooling channel 120 is shaped such that the width W_{R} in the radial direction is smaller than the width W_{C} in the circumferential direction C perpendicular to the radial direction R and than the width W_{D} in the flow direction D perpendicular to the radial direction R.

Specifically, referring to FIG. 4 (based on the cross section of the segment body 110 when viewed in the circumferential direction C), the curved portion 121 is formed such that the width W_{D} in the flow direction D is larger than the width W_{R} in the radial direction R. Specifically, referring to FIG. 5 (based on the cross section of the segment body 110 when viewed in the upstream direction of the flow direction D), the curved portion 121 is formed such that the width W_{C} in the circumferential direction C is larger than the width W_{R} in the radial direction R.

In this case, the widths W_{C} and W_{D} of the cooling channel 120 in the directions C and D perpendicular to the radial direction R are larger than the width W_{R} in the radial direction R, so that the contact area between the cooling air introduced into the cooling channel 120 and the inner wall surface portion of the cooling channel 120 in the radial direction (R) is increased compared to the related art. Therefore, according to the present invention, it is possible to effectively dissipate the heat transferred to the ring segment 100 from the high-temperature combustion gas or steam flowing through the turbine casing 11.

In addition, in the ring segment 100 and the turbomachine including the same according to the present invention, the cooling channel is formed in a meandering shape in which the cooling channel overall extends along the flow direction of the fluid flowing through the turbine casing and has multiple curved portions bent in the circumferential direction of the turbine casing. This structure also increases the contact area between the cooling air flowing through the cooling channel and the radially inner wall surface portion of the cooling channel. Therefore, the efficiency of cooling the ring segment is improved.

Referring to FIG. 3, the inlet 123 of the first cooling channel 120a and the inlet 123 of the second cooling channel 120b are disposed adjacent to each other along the flow direction D. The first cooling channel 120a and the second cooling channel 120b each have two unit cooling channels adjacent to each other in the circumferential direction C, and the length of one unit cooling channel in the flow direction D is smaller than the length of the other unit cooling channel in the flow direction D. Therefore, when the inlet 123 of the first cooling channel 120a and the inlet 123 of the second cooling channel 120b are arranged adjacent to each other in the flow direction D, the relatively short unit cooling channel of the first cooling channel 120a and the relatively short unit cooling channel of the second cooling channel 120b are placed on the same line in the flow direction D. In this case, as shown in FIG. 3, the multiple first cooling channels 120a and the multiple second cooling channels 120b can be formed more densely in one segment body 110. Therefore, the segment body 110 can be more effectively cooled.

Referring to FIGS. 3 and 4, the cooling cavity 130 may be divided into a first cooling cavity 131 and a second cooling cavity 132 by a partition wall 133 disposed in the cooling cavity 130. The first cooling cavity 131 is disposed on the upstream side of the partition wall 133, and the second cooling cavity 132 is disposed on the downstream side of the partition wall 133. In addition, the inlet 123 of each of the multiple first cooling channels 120a is connected to the first cooling cavity 131, and the inlet 123 of each of the multiple second cooling channels 120b is connected to the second cooling cavity 132. Accordingly, the cooling air introduced into the first cooling cavity 131 through the RS cavity 150 flows into the multiple first cooling channels 120a to cool the segment body 110, and the cooling air introduced into the second cooling cavity 132 through the RS cavity 150 flows into the multiple second cooling channels 120b to cool the segment body 110.

## Claims

1. A gas turbine or steam turbine, comprising:
a casing (11); and
a ring segment (100) installed on an inner circumferential surface of the casing (11) and disposed to face an end of a blade (22) disposed inside the casing (11), the ring segment (100) comprising:
a segment body (110) disposed radially inside the casing (11) and provided with multiple cooling channels (120) through which cooling air flows and which are formed in the segment body (110); and
two segment protrusions (140) protruding outward from the segment body (110), coupled to the inner circumferential surface of the casing (11), and spaced apart from each other in a flow direction of fluid flowing through the casing (11) so as to form an RS cavity (150) through which cooling air flows,
wherein the cooling channels (120) are formed in a shape extending along the flow direction (D) of the fluid flowing through the casing (11) and each cooling channel (120) includes multiple curved portions (121) bent in a circumferential direction (C) of the casing (11),
wherein in a cross-section of the segment body (110) when viewed along the circumferential direction (C) of the casing (11), the curved portion (121) is formed such that a width (W_{D}) in the flow direction (D) of the fluid flowing through the casing (11) is larger than a width (W_{R}) in the radial direction (R) of the casing (11), and/or in a cross-section of the segment body (110) when viewed along the flow direction (D) of the fluid flowing through the casing (11), the curved portion (121) is formed such that a width (Wc) in the circumferential direction (C) of the casing (11) is larger than a width (W_{R}) in the radial direction (R) of the casing (11),
wherein each cooling channel (120) includes a return portion (122) that is U-shaped and in which a fluid changes a flow direction thereof so that the fluid flows to a second curved portion (121) of the multiple curved portions (121) from a first curved portion (121) of the multiple curved portions (121), wherein the first curved portion (121) and the second curved portion (121) are adjacent to each other in the circumferential direction, and the return portion (122) is disposed adjacent to a downstream end or an upstream end of the segment body (110); and
wherein each cooling channel (120) comprises an inlet (123) that is connected to one of the curved portions (121) to receive cooling air from the RS cavity (150) and from which the received cooling air flows to the multiple curved portions (121), and an outlet (124) that is connected to one of the multiple curved portions (121) of the cooling channel (120) and communicates with the outside of the segment body (110) and from which the cooling air flowing through the multiple curved portions (121) is discharged downstream or upstream in terms of the flow direction (D) of the fluid flowing through the casing (11).

2. The gas turbine or steam turbine according to claim 1, wherein the multiple cooling channels (120) comprise:
multiple first cooling channels (120a) passing through a downstream end of the segment body (110) in the flow direction of the fluid flowing through the casing (11), and
multiple second cooling channels (120b) alternately disposed with the multiple first cooling channels (120a), passing through an upstream end of the segment body (110) in the flow direction of the fluid flowing through the casing (11).

3. The gas turbine or steam turbine according to claim 2, wherein the first cooling channels (120a) comprise:
extending upstream from the downstream end of the segment body (110), and then reversely extending downstream from an upstream side of the segment body (110),
wherein the second cooling channel (120b) comprise:
extending downstream from the upstream end of the segment body (110), and then reversely extending upstream from a downstream side of the segment body (110).

4. The gas turbine or steam turbine according to any one of the preceding claims, wherein the multiple curved portions (121) comprise multiple first bent portions (121a) bent in a first circumferential direction of the circumferential directions of the casing (11) and multiple second bent portions (121b) alternately arranged with the multiple first bent portions (121a) and bent in a second circumferential direction different from the first circumferential direction.

5. The gas turbine or steam turbine according to any one of claims 2 to 4 insofar as being dependent upon claim 2, wherein the first cooling channels (120a) include an inlet (123) through which the cooling air introduced into the RS cavity (150) is supplied.

6. The gas turbine or steam turbine according to any one of claims2 to 5 insofar as being dependent upon claim 2, wherein the second cooling channels (120b) include an inlet (123) through which the cooling air introduced into the RS cavity (150) is supplied.

7. The gas turbine or steam turbine according to claim 5 or 6, wherein the inlet (123) of the first cooling channel (120a) and the inlet (123) of the second cooling channel (120b) are disposed adjacent to each other in the flow direction of the fluid flowing through the casing (11).

8. The gas turbine or steam turbine according to any one of the preceding claims, wherein the segment body (110) is disposed outside the multiple cooling channels (120) in the radial direction and is provided with a cooling cavity (130) into which the cooling air is introduced from the RS cavity (150) and from which the cooling air is supplied to the multiple cooling channels (120).

9. The gas turbine or steam turbine according to claim 8, wherein the cooling cavity (130) is divided, by a partition wall installed therein, into a first cooling cavity (131) communicating with the first cooling channel (120a) and a second cooling cavity (132) communicating with the second cooling channel (120b).

## Patentansprüche

1. Gasturbine oder Dampfturbine, umfassend:
ein Gehäuse (11); und
ein Ringsegment (100), das auf einer inneren Umfangsfläche des Gehäuses (11) installiert und so angeordnet ist, dass es einem Ende einer innerhalb des Gehäuses (11) angeordneten Schaufel (22) gegenübersteht, wobei das Ringsegment (100) umfasst:
einen Segmentkörper (110), der radial innerhalb des Gehäuses (11) angeordnet und mit mehrfachen Kühlkanälen (120) versehen ist, durch die Kühlluft strömt und die in dem Segmentkörper (110) ausgebildet sind; und zwei Segmentvorsprünge (140), die von dem Segmentkörper (110) nach außen vorstehen, mit der inneren Umfangsfläche des Gehäuses (11) gekoppelt sind und voneinander in Strömungsrichtung eines durch das Gehäuse (11) strömenden Fluids voneinander beabstandet sind, um einen RS-Hohlraum (150) auszubilden, durch den Kühlluft strömt,
wobei die Kühlkanäle (120) in einer Form ausgebildet sind, die sich entlang der Strömungsrichtung (D) des durch das Gehäuse (11) strömenden Fluids erstreckt, und jeder Kühlkanal (120) mehrere gekrümmte Abschnitte (121) umfasst, die in einer Umfangsrichtung (C) des Gehäuses (11) gebogen sind, wobei in einem Querschnitt des Segmentkörpers (110) bei Betrachtung entlang der Umfangsrichtung (C) des Gehäuses (11) der gekrümmte Abschnitt (121) so ausgebildet ist, dass eine Breite (W_{D}) in Strömungsrichtung (D) des durch das Gehäuse (11) strömenden Fluids größer als eine Breite (W_{R}) in Radialrichtung (R) des Gehäuses (11) ist, und/oder in einem Querschnitt des Segmentkörpers (110) bei Betrachtung entlang der Strömungsrichtung (D) des durch das Gehäuse (11) strömenden Fluids der gekrümmte Abschnitt (121) so ausgebildet ist, dass eine Breite (Wc) in Umfangsrichtung (C) des Gehäuses (11) größer als eine Breite (W_{R}) in Radialrichtung (R) des Gehäuses (11) ist, wobei jeder Kühlkanal (120) einen Rücklaufabschnitt (122) umfasst, der U-förmig ist und in dem ein Fluid seine Strömungsrichtung ändert, so dass das Fluid von einem ersten gekrümmten Abschnitt (121) der mehreren gekrümmten Abschnitte (121) zu einem zweiten gekrümmten Abschnitt (121) der mehreren gekrümmten Abschnitte (121) strömt, wobei der erste gekrümmte Abschnitt (121) und der zweite gekrümmte Abschnitt (121) in Umfangsrichtung aneinander angrenzen und der Rücklaufabschnitt (122) angrenzend an ein stromabwärtiges Ende oder ein stromaufwärtiges Ende des Segmentkörpers (110) angeordnet ist; und
wobei jeder Kühlkanal (120) einen Einlass (123), der mit einem der gekrümmten Abschnitte (121) verbunden ist, um Kühlluft aus dem RS-Hohlraum (150) aufzunehmen, und von dem die aufgenommene Kühlluft zu den mehreren gekrümmten Abschnitten (121) strömt, und einen Auslass (124), der mit einem der mehreren gekrümmten Abschnitte (121) des Kühlkanals (120) verbunden ist und mit der Außenseite des Segmentkörpers (110) in Verbindung steht und aus dem die durch die mehreren gekrümmten Abschnitte (121) strömende Kühlluft in Bezug auf die Strömungsrichtung (D) des durch das Gehäuse (11) strömenden Fluids stromabwärts oder stromaufwärts ausgestoßen wird, umfasst.

2. Gasturbine oder Dampfturbine nach Anspruch 1, wobei die mehreren Kühlkanäle (120) umfassen:
mehrere erste Kühlkanäle (120a), die durch ein stromabwärtiges Ende des Segmentkörpers (110) in Strömungsrichtung des durch das Gehäuse (11) strömenden Fluids verlaufen, und
mehrere zweite Kühlkanäle (120b), die abwechselnd mit den mehreren ersten Kühlkanälen (120a) angeordnet sind und durch ein stromaufwärtiges Ende des Segmentkörpers (110) in Strömungsrichtung des durch das Gehäuse (11) strömenden Fluids verlaufen.

3. Gasturbine oder Dampfturbine nach Anspruch 2, wobei die ersten Kühlkanäle (120a) umfassen:
ein Erstrecken von dem stromabwärtigen Ende des Segmentkörpers (110) stromaufwärts und anschließend ein entgegengesetztes Erstrecken von einer stromaufwärtigen Seite des Segmentkörpers (110) stromabwärts,
wobei die zweiten Kühlkanäle (120b) umfassen:
ein Erstrecken von dem stromaufwärtigen Ende des Segmentkörpers (110) stromabwärts und anschließend ein entgegengesetztes Erstrecken stromaufwärts von einer stromabwärtigen Seite des Segmentkörpers (110).

4. Gasturbine oder Dampfturbine nach einem der vorhergehenden Ansprüche, wobei die mehreren gekrümmten Abschnitte (121) mehrere erste gebogene Abschnitte (121a), die in einer ersten Umfangsrichtung der Umfangsrichtungen des Gehäuses (11) gebogen sind, und mehrere zweite gebogene Abschnitte (121b), die abwechselnd mit den mehreren ersten gebogenen Abschnitten (121a) angeordnet und in einer zweiten Umfangsrichtung gebogen sind, die sich von der ersten Umfangsrichtung unterscheidet, umfassen.

5. Gasturbine oder Dampfturbine nach einem der Ansprüche 2 bis 4, soweit abhängig von Anspruch 2, wobei die ersten Kühlkanäle (120a) einen Einlass (123) umfassen, durch den die in den RS-Hohlraum (150) eingeführte Kühlluft zugeführt wird.

6. Gasturbine oder Dampfturbine nach einem der Ansprüche 2 bis 5, soweit abhängig von Anspruch 2, wobei die zweiten Kühlkanäle (120b) einen Einlass (123) umfassen, durch den die in den RS-Hohlraum (150) eingeführte Kühlluft zugeführt wird.

7. Gasturbine oder Dampfturbine nach Anspruch 5 oder 6, wobei der Einlass (123) des ersten Kühlkanals (120a) und der Einlass (123) des zweiten Kühlkanals (120b) in Strömungsrichtung des durch das Gehäuse (11) strömenden Fluids angrenzend aneinander angeordnet sind.

8. Gasturbine oder Dampfturbine nach einem der vorhergehenden Ansprüche, wobei der Segmentkörper (110) außerhalb der mehreren Kühlkanäle (120) in Radialrichtung angeordnet und mit einem Kühlhohlraum (130) versehen ist, in den die Kühlluft aus dem RS-Hohlraum (150) eingeführt wird und von dem die Kühlluft zu den mehreren Kühlkanälen (120) zugeführt wird.

9. Gasturbine oder Dampfturbine nach Anspruch 8, wobei der Kühlhohlraum (130) durch eine darin installierte Trennwand in einen ersten Kühlhohlraum (131), der mit dem ersten Kühlkanal (120a) in Verbindung steht, und einen zweiten Kühlhohlraum (132), der mit dem zweiten Kühlkanal (120b) in Verbindung steht, unterteilt ist.

## Revendications

1. Turbine à gaz ou à vapeur, comprenant :
un carter (11) ; et
un segment annulaire (100) monté sur une surface circonférentielle intérieure du carter (11) et disposé de manière à faire face à une extrémité d'une aube (22) disposée à l'intérieur du carter (11), ledit segment annulaire (100) présentant :
un corps de segment (110) disposé radialement à l'intérieur du carter (11) et pourvu de plusieurs canaux de refroidissement (120) par lesquels s'écoule de l'air de refroidissement, et qui sont formés dans le corps de segment (110) ; et
deux saillies de segment (140) s'étendant vers l'extérieur depuis le corps de segment (110),
raccordées à la surface circonférentielle intérieure du carter (11), et espacées l'une de l'autre dans la direction d'écoulement du fluide dans le carter (11), de manière à former une cavité RS (150) où circule l'air de refroidissement,
où les canaux de refroidissement (120) sont formés avec une forme s'étendant dans la direction d'écoulement (D) du fluide dans le carter (11), et chaque canal de refroidissement (120) comprend plusieurs parties incurvées (121) dans la direction circonférentielle (C) du carter (11),
où, en section transversale du corps de segment (110) vu dans la direction circonférentielle (C) du carter (11), la partie incurvée (121) est formée de sorte qu'une largeur (W_{D}) dans la direction d'écoulement (D) du fluide dans le carter (11) soit supérieure à une largeur (W_{R}) dans la direction radiale (R) du carter (11), et/ou, en section transversale du corps de segment (110) vu dans la direction d'écoulement (D) du fluide dans le carter (11), la partie incurvée (121) est formée de sorte qu'une largeur (W_{C}) dans la direction circonférentielle (C) du carter (11) est supérieure à une largeur (W_{R}) dans la direction radiale (R) du carter (11),
où chaque canal de refroidissement (120) comprend une partie de retour (122) en forme de U où un fluide change sa direction d'écoulement, de sorte que le fluide s'écoule vers une deuxième partie incurvée (121) entre les plusieurs parties incurvées (121) à partir d'une première partie incurvée (121) des plusieurs parties incurvées (121), la première partie incurvée (121) et la deuxième partie incurvée (121) étant adjacentes l'une à l'autre dans la direction circonférentielle, et la partie de retour (122) étant adjacente à une extrémité aval ou à une extrémité amont du corps de segment (110) ; et
où chaque canal de refroidissement (120) comprend une entrée (123) reliée à l'une des parties incurvées (121) pour recevoir de l'air de refroidissement provenant de la cavité RS (150), et depuis laquelle l'air de refroidissement reçu s'écoule vers les plusieurs parties incurvées (121), et une sortie (124) reliée à l'une des plusieurs parties incurvées (121) du canal de refroidissement (120) et communiquant avec l'extérieur du corps de segment (110), et depuis laquelle l'air de refroidissement s'écoulant par les plusieurs parties incurvées (121) est refoulé en aval ou en amont par rapport à la direction d'écoulement (D) du fluide dans le carter (11).

2. Turbine à gaz ou à vapeur selon la revendication 1, où les plusieurs canaux de refroidissement (120) comprennent :
plusieurs premiers canaux de refroidissement (120a) traversant une extrémité aval du corps de segment (110) dans la direction d'écoulement du fluide dans le carter (11), et
plusieurs deuxièmes canaux de refroidissement (120b) disposés en alternance avec les plusieurs premiers canaux de refroidissement (120a), traversant une extrémité amont du corps de segment (110) dans la direction d'écoulement du fluide dans le carter (11).

3. Turbine à gaz ou à vapeur selon la revendication 2, où les premiers canaux de refroidissement (120a) :
s'étendent en amont depuis l'extrémité aval du corps de segment (110), puis s'étendent inversement en aval depuis le côté amont du corps de segment (110),
où le deuxième canal de refroidissement (120b) :
s'étend vers l'aval depuis l'extrémité amont du corps de segment (110), puis s'étend inversement en amont depuis le côté aval du corps de segment (110).

4. Turbine à gaz ou à vapeur selon l'une des revendications précédentes, où les plusieurs parties incurvées (121) comprennent plusieurs premières parties courbes (121a) incurvées dans une première direction circonférentielle entre les directions circonférentielles du carter (11) et plusieurs deuxièmes parties courbes (121b) agencées en alternance avec les plusieurs premières parties courbes (121a) et incurvées dans une deuxième direction circonférentielle différente de la première direction circonférentielle.

5. Turbine à gaz ou à vapeur selon l'une des revendications 2 à 4, si dépendante de la revendication 2, où les premiers canaux de refroidissement (120a) comprennent une entrée (123) par laquelle est introduit l'air de refroidissement pénétrant dans la cavité RS (150).

6. Turbine à gaz ou à vapeur selon l'une des revendications 2 à 5, si dépendante de la revendication 2, où les deuxièmes canaux de refroidissement (120b) comprennent une entrée (123) par laquelle l'air de refroidissement introduit dans la cavité RS (150) est alimenté.

7. Turbine à gaz ou à vapeur selon la revendication 5 ou la revendication 6, où l'entrée (123) du premier canal de refroidissement (120a) et l'entrée (123) du deuxième canal de refroidissement (120b) sont adjacentes l'une à l'autre dans la direction d'écoulement du fluide dans le carter (11).

8. Turbine à gaz ou à vapeur selon l'une des revendications précédentes, où le corps de segment (110) est disposé en dehors des plusieurs canaux de refroidissement (120) dans la direction radiale et est pourvu d'une cavité de refroidissement (130) où l'air de refroidissement est introduit depuis la cavité RS (150) et depuis laquelle l'air de refroidissement est refoulé vers les plusieurs canaux de refroidissement (120).

9. Turbine à gaz ou à vapeur selon la revendication 8, où la cavité de refroidissement (130) est divisée par une paroi de séparation intérieure en une première cavité de refroidissement (131) communiquant avec le premier canal de refroidissement (120a) et une deuxième cavité de refroidissement (132) communiquant avec le deuxième canal de refroidissement (120b).
